(19) Europäisches Patentamt
European Patent Office
Office européen des brevets

(11) **EP 2 548 483 B1**

(12) **EUROPÄISCHE PATENTSCHRIFT**

(45) Veröffentlichungstag und Bekanntmachung des Hinweises auf die Patenterteilung:
**06.01.2016 Patentblatt 2016/01**

(51) Int Cl.:
*A47J 31/54* *(2006.01)*        *A47J 31/56* *(2006.01)*

(21) Anmeldenummer: **12175055.8**

(22) Anmeldetag: **05.07.2012**

(54) **Verfahren zur Ermittlung des Durchflusses in Heißgetränkemaschinen**

Method for determining the flow rate in hot drinks machines

Procédé de détermination du débit dans des machines de boissons chaudes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2011 DE 102011079542**

(43) Veröffentlichungstag der Anmeldung:
**23.01.2013 Patentblatt 2013/04**

(73) Patentinhaber: **BSH Hausgeräte GmbH
81739 München (DE)**

(72) Erfinder: **Daburger, Josef
83313 Siegsdorf-Hammer (DE)**

(56) Entgegenhaltungen:
**EP-A1- 0 771 542        DE-A1-102007 059 769
DE-A1-102010 055 849    GB-A- 2 449 213**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 548 483 B1

## Beschreibung

Die Erfindung betrifft ein Verfahren zur Ermittlung des Durchflusses, insbesondere des Volumenstroms, von Flüssigkeiten in einer Heißgetränkemaschine, insbesondere in einer Kaffeemaschine, die eine Zufuhröffnung und eine Abgabeöffnung für die Flüssigkeit und eine zwischen der Zufuhröffnung und der Abgabeöffnung angeordnete Flüssigkeitsheizung und einen Temperatursensor aufweist, wobei der Durchfluss durch eine Ermittlung der Heizleistung und eine Berechnung eines den Durchfluss repräsentierenden Quotienten aus der Heizleistung und der mit einer für die Flüssigkeit spezifischen Materialkonstante multiplizierten Temperaturdifferenz durchflussmesserfrei bestimmt und mit dem Temperatursensor eine Messung der Temperatur der Flüssigkeit stromab der Flüssigkeitsheizung durchgeführt wird. Ferner betrifft die Erfindung eine Heißgetränkemaschine, die auf diese Art und Weise den Durchfluss von Flüssigkeit, regelmäßig Wasser, bestimmt.

Aus der DE 10 2007 059 769 A1 ist ein Verfahren zur durchflussmesserfreien Ermittlung eines Durchflusses in einer Kaffeemaschine sowie eine Kaffeemaschine bekannt, die diese Verfahren durchführt. Die Kaffeemaschine weist eine zwischen einer Abgabeöffnung und einer Zufuhröffnung angeordnete Flüssigkeitsheizung auf. Mit einem ersten Temperatursensor wird stromab der Flüssigkeitsheizung eine erste Temperatur gemessen und mit einem zweiten Temperatursensor stromauf der Heizung eine zweite Temperaturmessung durchgeführt. Anschließend wird die Temperaturdifferenz aus den beiden Temperaturmessungen bestimmt. Der Durchfluss wird durch eine Ermittlung der Heizleistung und eine Berechnung eines den Durchfluss repräsentierenden Quotienten aus der Heizleistung und der mit einer für die flüssigkeitsspezifischen Materialkonstanten multiplizierten Temperaturdifferenz und damit ohne einen Durchflussmesser bestimmt.

Die DE 10 2010 055 849 A1 offenbart ein Verfahren zur Regelung der Heißwasserzubereitung für eine Getränkezubereitungsmaschine, das dadurch gekennzeichnet ist, dass die Pump- und die Heizleistung auf Basis eines Vergleichs der gemessenen Werte mit hinterlegten Werten geregelt wird. Die EP 0 771 542 A1 offenbart eine Kaffeemaschine, die durch eine Steuereinrichtung gekennzeichnet ist, die die von einem Temperatursensor empfangenen Signale so verarbeitet, dass das aus dem Wärmetauscher austretende Wasser bei einer Referenztemperatur (Tr) gehalten wird. Schließlich offenbart noch die GB 2 449 213 A einen Brühkopf für eine Getränkezubereitungsmaschine umfassend einen Barcode-Leser.

Es ist Aufgabe der Erfindung, eine Ermittlung des Durchflusses in einer Heißgetränkemaschine weiter zu vereinfachen.

Die Aufgabe der Erfindung wird dadurch gelöst, dass die Temperaturdifferenz aus der Messung der Flüssigkeitstemperatur und einer Luftraumtemperatur der Kaffeemaschine bestimmt wird. Dabei kann es sich bei dem Durchfluss um einen Volumenstrom handeln, d. h. um ein Flüssigkeitsvolumen, das innerhalb einer Zeitdauer durch eine Querschnittfläche gefördert wird. Es kann sich aber bei dem Durchfluss auch um einen Massenstrom handeln, d. h. die Masse der Flüssigkeit, die innerhalb einer Zeitdauer durch eine Querschnittfläche gefördert wird. Der Massenstrom kann aus dem Volumenstrom durch Multiplikation mit der Dichte der geförderten Flüssigkeit bestimmt werden.

Die Erfindung baut auf dem Messprinzip auf, dass die Heizleistung der Flüssigkeitsheizung proportional zum Produkt aus dem Massenstrom durch die Flüssigkeitsheizung und aus der Temperaturdifferenz stromauf und stromab der Flüssigkeitsheizung, multipliziert mit einer Materialkonstante der Flüssigkeit, ist. Mit anderen Worten: Ein hoher Massenstrom bewirkt eine hohe Heizleistung, ein geringer Massenstrom bewirkt eine geringe Heizleistung. Dies erlaubt eine Ermittlung des Durchflusses ohne die Verwendung von mechanischen Durchflussmessern, wie z. B. Flügelradzählern.

Die Ermittlung der Heizleistung kann entweder dadurch erfolgen, dass die Flüssigkeitsheizung mit einer konstanten - und damit bekannten - Heizleistung betrieben wird oder dadurch, dass eine variable Heizleistung im laufenden Betrieb ständig ermittelt wird. Hierzu kann eine entsprechend ausgebildete Regeleinrichtung vorgesehen sein.

Die Erfindung löst sich von der Vorstellung, dass die Temperaturdifferenz nur durch Messung mittels zweier Temperatursensoren bestimmt werden kann, nämlich mit einem Temperatursensor stromauf, also eingangsseitig, und einem Temperatursensor stromab, also ausgangsseitig der Flüssigkeitsheizung. Die Erfindung macht sich stattdessen die Erkenntnis zunutze, dass die in der Heißgetränkemaschine zur Verfügung stehende Flüssigkeit in einem festen Bezug zu einer Luftraumtemperatur der Heißgetränkemaschine steht. Sie geht folglich davon aus, dass die Eingangstemperatur des Wassers stromauf der Flüssigkeitsheizung einer konkreten, bestimmbaren Luftraumtemperatur der Heißgetränkemaschine entspricht. Die Erfindung lehrt daher, die Temperaturdifferenz aus dieser Luftraumtemperatur der Heißgetränkemaschine und der Messung der Flüssigkeitstemperatur stromab der Heizung, also der aufgeheizten Flüssigkeit, zu bestimmen. Damit kann bei einer Heißgetränkemaschine der eingangs genannten Art ein Temperatursensor entfallen, so dass nur noch ein Temperatursensor erforderlich ist.

Die Erfindung macht sich insoweit die Feststellung zunutze, dass die Flüssigkeit bzw. das Wasser in einem Vorratstank der Heißgetränkemaschine im Laufe der Zeit die Luftraumtemperatur annimmt.

Erfindungsgemäß wird die Luftraumtemperatur gemessen, und zwar mit dem verbleibenden Temperatursensor der Kaffeemaschine. Die Erfindung lehrt also, den verbleibenden Temperatursensor stromab der Flüssigkeitsheizung doppelt zu nutzen, erfindungsgemäß nämlich einerseits zur Messung der Luftraumtemperatur und andererseits auf herkömmliche Weise zur Messung der aufgeheizten Flüssigkeit stromab der Flüssigkeitsheizung. Hierzu erfolgt eine Messabfrage des Temperatursensors, bevor durch Aktivieren einer Pumpe der Heißgetränkemaschine Flüssigkeit durch die Flüssigkeitsheizung und damit auch zu dem Temperatursensor gefördert wird. Zu diesem Zeitpunkt, zu dem der Temperatursensor noch nicht mit Flüssigkeit benetzt ist, tritt er nur mit der Umgebungsluft in Kontakt und liefert auf die Temperaturabfrage hin einen der Luftraumtemperatur entsprechenden Messwert. Somit muss auf eine genaue Bestimmung der Luftraumtemperatur bei der Ermittlung des Durchflusses nicht verzichtet werden.

Die Ermittlung der Heizleistung kann prinzipiell zu jedem Zeitpunkt nach Aktivieren der Flüssigkeitsheizung sowie der Pumpe zur Förderung von Flüssigkeit durch die Flüssigkeitsheizung durchgeführt werden. Vorzugsweise wird die Ermittlung der Heizleistung erst auf ein Erfassen eines Erreichens einer vorgegebenen Soll-Temperatur der Flüssigkeit hin durchgeführt. Die Heizleistung wird also erst ermittelt, wenn die Flüssigkeit eine vorgegebene Solltemperatur erreicht hat. Hierdurch bleiben Einschwingvorgänge bei der Inbetriebnahme der Pumpe und bei der Inbetriebnahme der Flüssigkeitsheizung unberücksichtigt und können somit die Ermittlung der Heizleistung nicht verfälschen. Dadurch kann die Genauigkeit des Verfahrens zur Ermittlung des Durchflusses gesteigert werden.

In einer bevorzugten Weiterbildung ist vorgesehen, für die Ermittlung des Durchflusses während der Einschwingvorgänge bei der Inbetriebnahme ein verändertes Verfahren anzuwenden. In einer Variante dieser Weiterbildung wird ein konstanter Wert für die Förderrate während der Einschwingvorgänge berücksichtigt und zu dem später ermittelten geförderten Volumen addiert. Dieser Wert kann durch vorherige Messung empirisch bestimmt worden sein. In einer weiteren Variante dieser Weiterbildung wird der Temperaturverlauf auf Schwankungen hin ausgewertet. Sobald die Schwankungen einen vorgegebenen Wert unterschreiten, kann dies zur Erfassung des Endes der Einschwingvorgänge und damit auch zur Bestimmung der Dauer der Einschwingvorgänge verwendet werden. Die bestimmte Dauer der Einschwingvorgänge erlaubt eine genauere Bestimmung des während der Einschwingvorgänge geforderten Volumens, z. B. durch Multiplikation der bestimmten Dauer der Einschwingvorgänge mit einer Konstante für die Förderrate während der Einschwingvorgänge, die ebenfalls empirisch bestimmt oder festgelegt werden kann.

Die Pumpe kann mit einer konstanten Förderrate betrieben werden. Dies erlaubt einen einfachen Aufbau der Steuerelektronik für den Pumpenantrieb. Vorzugsweise wird auf Erfassen eines Überschreitens einer Zeitdauer bis zum Erreichen einer vorgegebenen Soll-Temperatur der Flüssigkeit die Förderrate der Pumpe reduziert. Eine Reduktion der Förderrate kann bei einer Phasenanschnittsteuerung durch eine Änderung des Phasenwinkels oder durch eine Änderung des Taktrhythmus erfolgen. Das Reduzieren der Förderrate der Pumpe erhöht die Verweildauer von Flüssigkeit in der Heizung, so dass die Temperatur der die Heizung verlassenden Flüssigkeit erhöht wird. Somit kann eine erforderliche Temperatur der Flüssigkeit auch dann gewährleistet werden, wenn die Soll-Temperatur nicht in einer bestimmten Mindestzeit erreicht wird.

Nach einer weiteren vorteilhaften Ausgestaltung der Erfindung wird der ermittelte Durchfluss bzw. der Volumenstrom mit einem Soll-Durchfluss bzw. einem Soll-Volumenstrom verglichen. Neben dem Volumenstrom als Durchfluss kann auch der Massenstrom als Größe für den Durchfluss Verwendung finden. Auf ein Erfassen einer Abweichung des Durchflusses von einem Soll-Durchfluss, wie z. B. eines Volumenstroms von einem Soll-Volumenstrom, kann die Berechnung zur Erhöhung der Genauigkeit korrigiert werden. Beispielsweise kann der Wert für die Umgebungstemperatur verändert werden, da eine derartige Abweichung darauf hindeutet, dass die Temperatur des in die Heißgetränkemaschine eingefüllten Wassers deutlich niedriger als die angenommene bzw. in der Berechung verwendete Umgebungstemperatur ist. Dies erlaubt es, eine Beeinträchtigung der Getränkequalität durch Fehlmessungen bzw. -berechnungen auszuschließen, da durch den Vergleich mit einem Soll-Durchflusswert sichergestellt wird, dass der gemessene Volumenstrom in einem zu erwartenden Werteintervall liegt. Die Werte für die Grenzen des Werteintervalls können in einem Speicher der Heißgetränkemaschine abgespeichert sein. Da bei gleich bleibender Pumpenansteuerung der resultierende Volumenstrom vom Druck abhängig ist, kann anstelle des Volumenstroms auch der Druck betrachtet werden.

Wenn die Kaffeemaschine zur Zubereitung verschiedener Kaffeegetränke ausgebildet ist können grundsätzlich für verschiedene Getränkearten verschiedene Soll-Durchflusswerte abgespeichert sein. Nach einer weiteren vorteilhaften Ausgestaltung wird der Soll-Durchfluss aus einer benutzerseitigen Geräteeingabe gewonnen. Eine Eingabe kann in einer Tasten- oder sonstigen Eingabe eines Wertes für den Soll-Durchflusswert bestehen. Eine besonders benutzerfreundliche Eingabe kann jedoch aus Barcode-Informationen bestehen, die geräteseitig ausgelesen werden können. Die Barcode-Informationen können beispielsweise auf Getränkekapseln aufgedruckt sein, die z. B. Kaffeepulver zur Zubereitung einer Getränkeeinheit eines Kaffeegetränks enthalten. Sie können zu Beginn einer Getränkezubereitung beim Einlegen der Getränkekapsel in die Heißgetränkemaschine ausgelesen werden. Somit stehen mit den Barcode-Informationen automatisch Soll-Durchflussinformationen zur Verfügung, je nachdem, ob z. B. als Kaffeegetränk ein Cappuccino oder ein Espresso zubereitet wird.

In entsprechender Weise kann nach einer weiteren vorteilhaften Ausgestaltung der Erfindung die ermittelte Heizleistung der Flüssigkeitsheizung mit einer vorgegebenen Soll-Heizleistung verglichen werden. Die Soll-Heizleistung kann ein in der Heißgetränkemaschine abgespeicherter Wert sein oder auch aus z. B. Barcode-Informationen einer Getränkekapsel o. Ä. gewonnen werden. Die vorgegebene Soll-Heizleistung gibt an, welche Heizleistung zu erwarten ist, wenn ein bestimmtes, ausgewähltes Heißgetränk zubereitet wird. Durch Vergleich der ermittelten Heizleistung mit einer vorgegebenen Soll-Heizleistung können Fehlmessungen und damit fehlerhafte Bestimmungen des Durchflusses vermieden und die Berechnung korrigiert werden.

Ferner gehört zur Erfindung eine Heißgetränkemaschine mit einer Zuführöffnung, einer Abgabeöffnung für eine Flüssigkeit, mit einer zwischen der Zuführöffnung und der Abgabeöffnung angeordneten Flüssigkeitsheizung und mit einem Temperatursensor zur Messung der Temperatur der Flüssigkeit stromab der Flüssigkeitsheizung sowie mit einer mit dem Temperatursensor verbundenen Durchflussbestimmungseinrichtung, die den Durchfluss durch Ermitteln der Heizleistung und Berechnung eines den Durchfluss differenzierenden Quotienten aus der Heizleistung und der mit einer für die Flüssigkeit spezifischen Materialkonstante multiplizierten Temperaturdifferenz durchflussmesserfrei bestimmt, wobei erfindungsgemäß die Heißgetränkemaschine, insbesondere die Durchflussbestimmungseinrichtung dazu ausgebildet ist, die Temperaturdifferenz aus der Temperatur der Flüssigkeit und einer Luftraumtemperatur der Heißgetränkemaschine zu bestimmen.

Erfindungsgemäß erfasst die Durchflussbestimmungseinrichtung die Luftraumtemperatur über den Temperatursensor. Er erhält dadurch eine Doppelfunktion, nämlich einerseits die Messung der Flüssigkeitstemperatur stromab der Flüssigkeitsheizung im Zubereitungsbetrieb und andererseits die Messung der Luftraumtemperatur, bevor eine Pumpe der Heißgetränkemaschine in Betrieb ist.

Der Temperatursensor kann die Umgebungstemperatur der Raumluft nur erfassen, wenn er trocken liegt, ihn also kein Wasser aus einem vorangegangenen Zubereitungsvorgang benetzt. Um ihn gegebenenfalls trocken fallen zu lassen, kann die Heißgetränkemaschine nach einer weiteren vorteilhaften Ausgestaltung der Erfindung stromauf des Temperatursensors ein Belüftungsventil aufweisen, das durch die Durchflussbestimmungseinrichtung ansteuerbar ist. Soll die Luftraumtemperatur gemessen werden, kann die Durchflussbestimmungseinrichtung das Belüftungsventil zuerst öffnen und den Temperatursensor vor einer Messung trocken legen.

Das Prinzip der Erfindung wird im Folgenden anhand von Zeichnungen beispielshalber noch näher erläutert. Es zeigen:

Figur 1   eine schematische Darstellung einer erfindungsgemäßen Kaffeemaschine, und
Figur 2   ein Ablaufdiagramm eines erfindungsgemäßen Verfahrens.

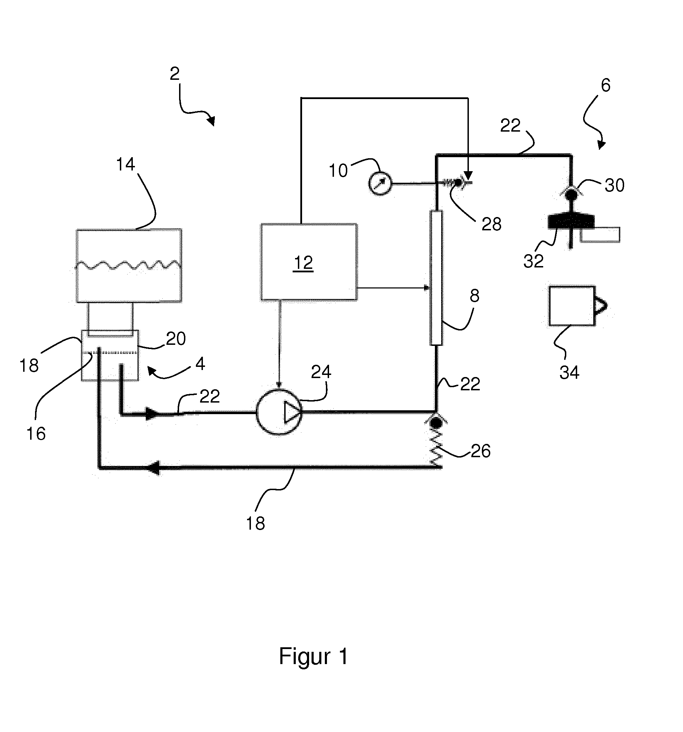

Figur 1 zeigt schematisch eine Kaffeemaschine 2 als Heißgetränkemaschine, die die Zubereitung von unterschiedlichen Kaffeegetränken unter Verwendung von Getränkekapseln 32 erlaubt.

Die Kaffeemaschine 2 weist einen Frischwassertank 14 auf, in dem Frischwasser zur Zubereitung von Kaffeegetränken bevorratet werden kann. Der Frischwassertank 14 ist mit einem Frischwasserandockventil 20 verbunden, in dem ein Sieb 16 zum Zurückhalten von Schwebstoffen angeordnet ist.

Das Frischwasserandockventil 20 weist eine Zuführöffnung 4 auf, die mit einem Flüssigkeitszulauf 22 verbunden ist. Im Flüssigkeitszulauf 22 ist eine als Schwingkolbenpumpe 24 ausgebildete Pumpe eingefügt, mit der Flüssigkeit mit einer einstellbaren Förderrate aus dem Frischwassertank 14 gefördert werden kann. Der Flüssigkeitszulauf 22 verläuft von der Schwingkolbenpumpe 24 weiter bis zu einer Flüssigkeitsheizung, die als massearmer Durchlauferhitzer 8 ausgebildet ist.

Stromab des Durchlauferhitzers 8 ist ein Temperatursensor 10 angeordnet, mit dem die Temperatur der durch den Durchlauferhitzer 8 aufgewärmten Flüssigkeit gemessen werden kann. Der Flüssigkeitszulauf 22 erstreckt sich weiter bis zu einer Abgabeöffnung 6, mit der eine Abgabe von durch den Durchlauferhitzer 8 erwärmter Flüssigkeit möglich ist.

An der Abgabeöffnung 6 ist eine Rücklaufsperre 30 in Form eines Rückschlagventils angeordnet, die verhindert, dass Flüssigkeit wieder zurück in den Flüssigkeitszulauf 22 strömen kann. Von der Rücklaufsperre 30 gelangt das aufgeheizte Wasser in die Getränkekapsel 32, die die aufgeheizte Flüssigkeit durchströmt und dabei Aromastoffe aufnimmt, um sich dann als fertiges Kaffeegetränk in einer Tasse 34 zu sammeln.

Ferner weist die Kaffeemaschine im Bereich des Flüssigkeitszulaufs 22 zwischen der Schwingkolbenpumpe 24 und dem Durchlauferhitzer 8 ein Überdruckventil 26 auf, das mit einem Flüssigkeitsrücklauf 18 verbunden ist, dessen zweites Ende am Frischwasserandockventil 20 endet. Es erlaubt eine Rückführung von Wasser durch den Flüssigkeitsrücklauf 18, um Überdruck abzubauen.

Ferner ist stromab des Durchlauferhitzers 8 ein Belüftungsventil 28 angeordnet, durch dessen Betätigung der Flüssigkeitszulauf 22 entleert werden kann.

Schließlich weist die Kaffeemaschine 2 eine Durchflussbestimmungseinrichtung 12 auf, mit der der Durchfluss von Flüssigkeit, d. h. der Volumenstrom von Flüssigkeit, durch den Flüssigkeitszulauf 22 ermittelt werden kann.

Die Durchflussbestimmungseinrichtung 12 ist eingangsseitig durch eine Signalleitung mit dem Temperatursensor 10 verbunden. Ferner ist die Durchflussbestimmungseinrichtung 12 ausgangsseitig durch Signalleitungen mit der Schwingkolbenpumpe 24, dem Durchlauferhitzer 8 sowie dem Belüftungsventil 28 verbunden, um diese ansteuern zu können.

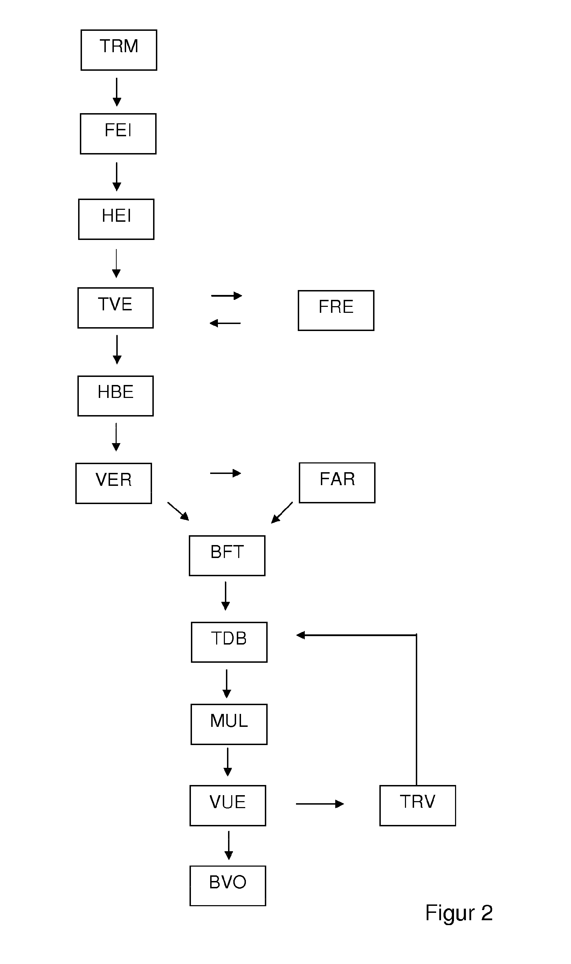

Figur 2 veranschaulicht den Verfahrensablauf zur Bestimmung des Volumenstroms durch die Durchflussbestimmungseinrichtung 12: Nach Inbetriebnahme der Kaffeemaschine 2 erfolgt in einem ersten Schritt TRM: "Luftraumtemperatur messen" eine Messung der Raumlufttemperatur $T_{Raum}$ durch den Temperatursensor 8. Hierzu steuert die Durchflussbestimmungseinrichtung 12 zuerst das Belüftungsventil 28 an und öffnet es, um eine Belüftung des Flüssigkeitszulaufs 22 zu bewirken. Durch das Belüften entleert sich der Flüssigkeitszulauf 22 durch Wirkung der Schwerkraft selbsttätig, falls er von einem vorangegangenen Zubereitungsvorgang noch Wasser enthält, so dass der Temperatursensor 10 trocken fällt. Zugleich wird durch Öffnen des Belüftungsventils 28 Umgebungsluft in den Flüssigkeitszulauf 22 eingesaugt, die den Temperatursensor 10 umspült. Anschließend erfolgt eine Abfrage des Temperatursensors 10 durch die Durchflussbestimmungseinrichtung 12 zur Bestimmung der Raumlufttemperatur $T_{Raum}$. Den Wert der Raumlufttemperatur $T_{Raum}$ speichert die Durchflussbestimmungseinrichtung 12 ab.

In einem anschließenden Schritt FEI: "Förderrate einstellen" aktiviert die Durchflussbestimmungseinrichtung 12 die Schwingkolbenpumpe 24. Die Schwingkolbenpumpe 24 wird mit kompletten Halbwellen einer Sinusperiode der Netzwechselspannung angesteuert, mit der die Kaffeemaschine 2 mit elektrischer Energie versorgt wird. Sie wird so lange betrieben, bis der Flüssigkeitszulauf 22 und die Getränkekapsel 32 mit Wasser aus dem Frischwassertank 14 gefüllt sind. Zur Ansteuerung der Schwingkolbenpumpe 24 kann eine Vollwellensteuerung verwendet werden, bei der z. B. eine erste und zweite Halbwelle auf die Schwingkolbenpumpe 24 aufgeschaltet wird, während die dritte und vierte Halbwelle unterdrückt wird. So wird der Volumenstrom reduziert und zugleich kann die geförderte Menge pro Zeit sehr gut abgeschätzt werden, wenn die Schwingkolbenpumpe 24 in dem getakteten Betriebsmodus betrieben wird.

Wenn der Flüssigkeitszulauf 22 und die Getränkekapsel 34 mit Wasser gefüllt sind, ändert die Durchflussbestimmungseinrichtung 12 den Betriebmodus, mit dem sie die Schwingkolbenpumpe 24 ansteuert. Nun wird die Vollwellensteuerung durch eine Phasenanschnittsteuerung ergänzt, bei der Teile einer sinusförmigen Halbwelle unterdrückt werden. Als Ergebnis dieses Betriebsmodus zur Ansteuerung der Schwingkolbenpumpe 24 wird sich ein konstanter Druck in dem flüssigkeitsführenden System aus dem Flüssigkeitszulauf 22 und der Getränkekapsel 32 einstellen.

Zeitverzögert nach dem Einschalten der Schwingkolbenpumpe 24 aktiviert die Durchflussbestimmungseinrichtung 12 in einem folgenden Schritt HEI: "Flüssigkeitsheizung einstellen" den Durchlauferhitzer 8. Nach einer gewissen Einschwingphase wird sich ein konstanter Temperaturwert für die Flüssigkeit einstellen, der mit dem Temperatursensor 10 stromab des Durchlauferhitzers 8 erfasst wird.

In einem weiteren Schritt TVE: "Temperaturvergleich" erfolgt ein Vergleich der Flüssigkeitstemperatur $T_{Mess}$ mit einer Soll-Temperatur $T_{soll}$:

$$T_{Mess} = T_{Soll}?$$

Dieser Vergleich wird nach einer gewissen vorgegebenen Zeitdauer $\Delta t$ durchgeführt. So wird sichergestellt, dass Einschwingvorgänge der Schwingkolbenpumpe 24 und des Durchlauferhitzers 8 die Temperaturmessung des Temperatursensors 10 nicht beeinträchtigen.

Wenn der Vergleich der gemessenen Flüssigkeitstemperatur $T_{Mess}$ mit der Soll-Temperatur $T_{Soll}$ ergibt, dass der Wert der gemessenen Flüssigkeitstemperatur $T_{Mess}$ unterhalb der Soll-Temperatur $T_{soll}$ liegt, wird in einem Schritt FRE: "Förderate reduzieren" die Förderrate reduziert, mit der die Schwingkolbenpumpe 24 Wasser aus dem Frischwassertank 14 durch den Durchlauferhitzer 8 fördert. Dies kann durch eine Reduzierung der Anzahl der durchgelassenen Vollwellen des sinusförmigen Signals oder durch Veränderung des Zündwinkels der Phasenanschnittsteuerung erfolgen. Wenn die Förderrate der Schwingkolbenpumpe 24 reduziert wird, wird nach einer vorgegebenen Zeitdauer $\Delta t$ ein erneuter Vergleich der gemessenen Flüssigkeitstemperatur $T_{Mess}$ mit der Soll-Temperatur $T_{Soll}$ durchgeführt.

Wenn der Vergleich der gemessenen Flüssigkeitstemperatur $T_{Mess}$ und der Soll-Temperatur $T_{Soll}$ ergibt, dass sie gleich sind, bestimmt die Durchflussbestimmungseinrichtung 12 in einem nächsten Schritt HBE: "Heizleistung bestimmen" die Heizleistung $\dot{Q}$ des Durchlauferhitzers 8. Dazu ermittelt die Durchflussbestimmungseinrichtung 12 die Leistungsaufnahme des Durchlauferhitzers 8, nämlich dessen mittlere Stromaufnahme, multipliziert sie mit der anliegenden gemessenen elektrischen Spannung und mit einem Korrekturfaktor, der den Wirkungsgrad des Durchlauferhitzers 8 berücksichtigt.

In einem weiteren Schritt VER: "Vergleichen" vergleicht die Durchflussbestimmungseinrichtung 12 die ermittelte Heizleistung Q mit einer Soll-Heizleistung $\dot{Q}_{Soll}$:

$$\dot{Q} = \dot{Q}_{Soll}?$$

Die Soll-Heizleistung $\dot{Q}_{Soll}$ kann ein in der oder durch die Durchflussbestimmungseinrichtung 12 abgespeicherter Wert sein, oder die Soll-Heizleistung $\dot{Q}_{Soll}$ wurde der Durchflussbestimmungseinrichtung 12 durch Auslesen eines Barcodes übermittelt, der von einer in die Kaffeemaschine 2 eingesetzten Getränkekapsel 32 ausgelesen wurde.

Wenn der Vergleich der Soll-Heizleistung $\dot{Q}_{soll}$ mit der Heizleistung $\dot{Q}$ ergibt, dass eine Abweichung vorliegt, wird in einem Schritt FAR: "Förderrate anheben oder reduzieren" die Förderrate der Schwingkolbenpumpe 24 entsprechend der Abweichung heraufgesetzt oder reduziert. Hierzu kann entsprechend die Vollwellensteuerung bzw. Phasenanschnittsteuerung verwendet werden, mit der die Schwingkolbenpumpe 24 angesteuert wird. Anschließend kann eine erneute Überprüfung erfolgen, ob nun die Heizleistung Q̇ mit der Soll-Heizleistung Q̇$_{Soll}$ übereinstimmt.

Wenn der Vergleich der Heizleistung Q mit der Soll-Heizleistung Q̇$_{Soll}$ ergibt, dass sie gleich sind, wird in einem nächsten Schritt BFT: "Bestimmen der Temperatur" die Flüssigkeitstemperatur T$_{Mess}$ stromab des Temperatursensors 10 bestimmt, d. h. die Temperatur des durch den Durchlauferhitzer 8 aufgeheizten Wassers.

In einem weiteren Schritt TDB: "Temperaturdifferenz bilden" wird die Temperaturdifferenz ΔT aus der Flüssigkeitstemperatur T$_{Mess}$ mit der Raumlufttemperatur T$_{Raum}$ gebildet, die eingangs im Schritt TRM mit dem trockenen Temperatursensor 10 gemessen wurde:

$$\Delta T = T_{Mess} - T_{Raum}$$

In einem weiteren Schritt MUL: "Multiplizieren" wird der Volumenstrom V bestimmt. Dabei wird zur Bestimmung des Volumenstroms V der Umstand genutzt, dass sich die Heizleistung Q der Flüssigkeitsheizung 8 aus dem Produkt aus dem Massenstrom ṁ durch die Flüssigkeitsheizung 8, aus der Temperaturdifferenzen ΔT stromab und stromauf der Flüssigkeitsheizung 8 und aus einer Materialkonstante c der Flüssigkeit berechnet:

$$\dot{Q} = \dot{m} \times \Delta T \times c$$

Mit ρ für die Dichte der Flüssigkeit gilt:

$$\dot{m} = \dot{V} \times \rho$$

Daraus lässt sich V berechnen:

$$\dot{V} = \frac{\dot{Q}}{c \times \Delta T \times \rho}$$

In einem weiteren Schritt VUE: "Vergleich Heizleitung/Soll-Heizleistung" erfolgt ein Vergleich des Volumenstroms V mit einem Soll-Volumenstrom V̇$_{Soll}$.

$$\dot{V} = \dot{V}_{Soll}?$$

Ein Wert für einen derartigen Soll-Volumenstrom V̇$_{Soll}$ kann in der Durchflussbestimmungseinrichtung 12 abgespeichert sein oder durch Auslesen eines Barcodes einer Getränkekapsel 32 ermittelt und der Durchflussbestimmungseinrichtung 12 zur Verfügung gestellt werden.

Ergibt der Vergleich des Volumenstroms V mit dem Soll-Volumenstrom V̇$_{Soll}$ eine Abweichung, kann das darauf hindeuten, dass die Messung der Raumtemperatur T$_{Raum}$ im ersten Schritt TRM fehlerhaft war, weil z. B. die Kaffeemaschine 2 unmittelbar vor ihrer Inbetriebnahme mit kühlem Wasser aus dem Leitungsnetz befüllt wurde, das daher nicht eine Luftraumtemperatur von beispielsweise 20 bis 22°C aufweist. Entsprechend wird in einem Schritt TRV: "Wert für Luftraumtemperatur verändern" der Wert für Raumtemperatur T$_{Raum}$ reduziert oder erhöht und eine erneute Temperaturdifferenz ΔT bestimmt. Anschließend wird unter Verwendung des veränderten Werts für die Raumtemperatur T$_{Raum}$ im Schritt TDB wieder die Temperaturdifferenz ΔT neu bestimmt und die nachfolgenden Schritte MUL und VUE erneut durchlaufen.

Wenn der Volumenstrom V mit dem Soll-Volumenstrom V̇$_{Soll}$ übereinstimmt, erfolgt in einem letzten Schritt BVO: "Bestimmen des Fördervolumens" eine Multiplikation des Volumenstroms V mit der Förderdauer, d. h. die Zeitdauer, in der die Schwingkolbenpumpe 24 Flüssigkeit fördert, um das während der Förderdauer geförderte Volumen zu bestimmen. Somit steht als Ergebnis ein Wert für das geförderte Volumen aus dem Frischwassertank 14 zur Tasse 34 zur Verfügung.

Um die Genauigkeit der Bestimmung des Volumenstroms V weiter zu steigern, kann für den Durchfluss während der Einschwingvorgänge, d. h. für den Volumenstrom V , ein konstanter Wert für die Förderrate während der Einschwingvorgänge des Durchlauferhitzers 8 berücksichtigt und aufaddiert werden. Dieser Wert kann durch vorherige Messung empirisch bestimmt worden sein. Die Genauigkeit der Bestimmung des Volumenstroms V während der Einschwingvorgänge kann weiter gesteigert werden, wenn der Temperaturverlauf während der Einschwingvorgänge auf Schwankungen hin ausgewertet wird. Wenn die Schwankungen einen vorgegebenen Wert unterschreiten, erlaubt dies die Erfassung des Endes der Einschwingvorgänge und damit eine Bestimmung der Dauer der Einschwingvorgänge. Durch Multiplikation der bestimmten Dauer der Einschwingvorgänge mit einer Konstante für die Förderrate während der Einschwingvorgänge, die ebenfalls empirisch bestimmt sein kann, kann das während der Einschwingvorgänge geförderte Volumen genauer bestimmt werden.

Ferner kann durch Multiplikation des ermittelten Volumenstroms mit der Dichte $\rho$ der Flüssigkeit der Massenstrom m bestimmt werden. Durch Multiplikation des Massenstroms m mit der Förderdauer kann die geförderte Masse bestimmt werden, die aus dem Frischwassertank 14 durch den Flüssigkeitszulauf zur Getränkekapsel 32 und damit zur Tasse 34 gefördert wurde.

Das in anhand von Figur 2 beschriebene Verfahren bietet einige Möglichkeiten, um getroffene Annahmen, zum Beispiel bezüglich einer Luftraumtemperatur, zu überprüfen und ggf. zu korrigieren, um so zu einem gewünschten Ergebnis zu kommen. Dabei sind nicht alle Korrekturmöglichkeiten gleichzeitig, sondern ggf. alternativ anzuwenden, um das Zubereitungsergebnis nicht zu verfälschen.

Da es sich bei dem oben detailliert beschriebenen Verfahren und der Vorrichtung um ein Ausführungsbeispiel handelt, können sie in üblicher Weise vom Fachmann in einem weiten Umfang modifiziert werden, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

Bezugszeichenliste

| | |
|---|---|
| 2 | Kaffeemaschine |
| 4 | Zuführöffnung |
| 6 | Abgabeöffnung |
| 8 | Flüssigkeitsheizung/Durchlauferhitzer |
| 10 | Temperatursensor |
| 12 | Durchflussbestimmungseinrichtung |
| 14 | Frischwassertank |
| 16 | Sieb |
| 18 | Flüssigkeitsrücklauf |
| 20 | Frischwasserandockventil |
| 22 | Flüssigkeitszulauf |
| 24 | Pumpe/Schwingkolbenpumpe |
| 26 | Überdruckventil |
| 28 | Belüftungsventil |
| 30 | Rücklaufsperre |
| 32 | Getränkekapsel |
| 34 | Tasse |

| | |
|---|---|
| c | Materialkonstante der Flüssigkeit |
| $\Delta T$ | Temperaturdifferenz |
| $\Delta t$ | Zeitdauer |
| m | Massenstrom |
| $\rho$ | Dichte |
| $\dot{Q}$ | Heizleistung |
| $\dot{Q}_{Soll}$ | Soll-Heizleistung |
| $T_{Raum}$ | Umgebungstemperatur/Raumlufttemperatur |
| $T_{soll}$ | Soll-Temperatur |
| $T_{Mess}$ | Flüssigkeitstemperatur |
| $\dot{V}$ | Volumenstrom |
| $\dot{V}_{Soll}$ | Soll-Volumenstrom |
| BFT | Bestimmen der Temperatur |
| BVO | Bestimmen des Fördervolumens |
| FAR | Förderrate anheben oder reduzieren |
| FEI | Förderrate einstellen |
| FRE | Förderrate reduzieren |
| HBE | Heizleistung bestimmen |
| HEI | Flüssigkeitsheizung einstellen |
| MUL | Multiplizieren |
| TDB | Temperaturdifferenz bilden |
| TRM | Luftraumtemperatur messen |
| TRV | Wert für Luftraumtemperatur verändern |
| TVE | Temperaturvergleich |
| VER | Vergleichen |
| VUE | Vergleich Heizleitung/Soll-Heizleistung |

**Patentansprüche**

1. Verfahren zur Ermittlung des Durchflusses, insbesondere des Volumenstroms (V), von Flüssigkeiten in einer Heißgetränkemaschine (2), die eine Zuführöffnung (4) und eine Abgabeöffnung (6) für die Flüssigkeit und eine zwischen der Zuführöffnung (4) und der Abgabeöffnung (6) angeordnete Flüssigkeitsheizung (8) und einen Temperatursensor (10) stromab der Flüssigkeitsheizung (8) aufweist, wobei der Durchfluss durch eine Ermittlung der Heizleistung ($\dot{Q}$) und eine Berechnung eines den Durchfluss repräsentierenden Quotienten aus der Heizleistung ($\dot{Q}$) und der mit einer für die Flüssigkeit spezifischen Materialkonstante (c) multiplizierten Temperaturdifferenz ($\Delta T$) durchflussmesserfrei bestimmt wird, **dadurch gekennzeichnet, dass** die Temperaturdifferenz ($\Delta T$) aus der Messung der Flüssigkeitstemperatur ($T_{Mess}$) und einer mit dem Temperatursensor (10) gemessenen Luftraumtemperatur ($T_{Raum}$) der Heißgetränkemaschine (2) bestimmt wird.

2. Verfahren nach Anspruch 1, **dadurch gekennzeichnet, dass** die Ermittlung der Heizleistung ($\dot{Q}$) auf ein Erfassen eines Erreichens einer vorgegebenen Soll-Temperatur ($T_{Soll}$) der Flüssigkeit hin durchgeführt wird.

3. Verfahren nach nach Anspruch 1 oder 2, **dadurch gekennzeichnet, dass** auf Erfassen eines Überschreitens einer Zeitdauer ($\Delta t$) bis zum Erreichen einer vorgegebenen Soll-Temperatur ($T_{Soll}$) der Flüssigkeit hin die Förderrate (F) einer Pumpe (24) der Kaffeemaschine (2) reduziert wird.

4. Verfahren nach einem der Ansprüche 1 bis 3, **dadurch gekennzeichnet, dass** der ermittelte Durchfluss, insbesondere der Volumenstrom ($\dot{V}$), mit einem Soll-Durchfluss, insbesondere einem Soll-Volumenstrom ($\dot{V}_{Soll}$), verglichen wird.

5. Verfahren nach Anspruch 4, **dadurch gekennzeichnet, dass** der Soll-Durchfluss, insbesondere

Soll-Volumenstrom ($\dot{V}_{Soll}$), aus Barcode-Informationen gewonnen wird.

6. Verfahren nach einem der Ansprüche 1 bis 5, **dadurch gekennzeichnet, dass** die ermittelte Heizleistung ($\dot{Q}$) der Flüssigkeitsheizung (8) mit einer vorgegebenen Soll-Heizleistung ($\dot{Q}_{Soll}$) verglichen wird.

7. Verfahren nach Anspruch 6, **dadurch gekennzeichnet, dass** auf Erfassen einer Abweichung der ermittelten Heizleistung ($\dot{Q}$) der Flüssigkeitsheizung (8) von der Soll-Heizleistung ($\dot{Q}_{Soll}$) hin der Wert der Umgebungstemperatur ($T_{Raum}$) verändert wird.

8. Heißgetränkemaschine, insbesondere Kaffeemaschine (2), mit einer Zuführöffnung (4), einer Abgabeöffnung (6) für eine Flüssigkeit, mit einer zwischen der Zufuhröffnung (4) und der Abgabeöffnung (6) angeordneten Flüssigkeitsheizung (8) und mit einem Temperatursensor (10) stromab der Flüssigkeitsheizung (8) zur Messung der Temperatur der Flüssigkeit ($T_{Mess}$) sowie einer mit dem Temperatursensor (10) verbundenen Durchflussbestimmungseinrichtung (12), die den Durchfluss, insbesondere den Volumenstrom ($\dot{V}$), von Flüssigkeiten in einer Kaffeemaschine (2) durch Ermitteln der Heizleistung ($\dot{Q}$) und Berechnung eines den Durchfluss differenzierenden Quotienten aus der Heizleistung ($\dot{Q}$) und der mit einer für die Flüssigkeit spezifischen Materialkonstante (c) multiplizierten Temperaturdifferenz ($\Delta T$) durchflussmesserfrei bestimmt, **dadurch gekennzeichnet, dass** die Durchflussbestimmungseinrichtung (12) dazu ausgebildet ist, dass sie die Temperaturdifferenz ($\Delta T$) aus der Flüssigkeitstemperatur ($T_{Mess}$) und einer mit dem Temperatursensor (10) gemessen Luftraumtemperatur ($T_{Raum}$) der Heißgetränkemaschine (2) bestimmt.

## Claims

1. Method for determining the flow rate, in particular the volume flow ($\dot{V}$), of liquids in a hot drinks machine (2), which has a feed opening (4) and a discharge opening (6) for the liquid and a liquid heater (8) arranged between the feed opening (4) and the discharge opening (6), and a temperature sensor (10) downstream from the liquid heater (8), wherein the flow rate is ascertained by determining, without the use of a flow rate meter, the heat output ($\dot{Q}$), and by calculating a quotient representing the flow rate from the heat output ($\dot{Q}$) and the temperature difference ($\Delta T$) multiplied by a material constant (c) specific to the liquid, **characterised in that** the temperature difference ($\Delta T$) is determined from the measurement of the liquid temperature ($T_{Mess}$) and an ambient air temperature ($T_{Raum}$) of the hot drinks machine (2) measured using the temperature sensor (10).

2. Method according to claim 1, **characterised in that** the determination of the heat output ($\dot{Q}$) is performed when it is detected that the liquid has reached a predefined target temperature ($T_{Soll}$).

3. Method according to claim 1 or 2, **characterised in that** when it is detected that a time period ($\Delta t$) by which a predefined target temperature ($T_{Soll}$) of the liquid is reached has been exceeded, the supply rate (F) of a pump (24) of the coffee machine (2) is reduced.

4. Method according to one of claims 1 to 3, **characterised in that** the determined flow rate, in particular the volume flow ($\dot{V}$), is compared to a target flow rate, in particular a target volume flow ($\dot{V}_{Soll}$).

5. Method according to claim 4, **characterised in that** the target flow rate, in particular the target volume flow ($\dot{V}_{Soll}$), is obtained from barcode information.

6. Method according to one of claims 1 to 5, **characterised in that** the determined heat output ($\dot{Q}$) of the liquid heater (8) is compared to a predefined target heat output ($\dot{Q}_{Soll}$).

7. Method according to claim 6, **characterised in that** when a deviation between the determined heat output ($\dot{Q}$) of the liquid heater (8) and the target heat output ($\dot{Q}_{Soll}$) is detected the value of the ambient temperature ($T_{Raum}$) is changed.

8. Hot drinks machine, in particular coffee machine (2), with a feed opening (4), a discharge opening (6) for a liquid, with a liquid heater (8) arranged between the feed opening (4) and the discharge opening (6), and with a temperature sensor (10) downstream from the liquid heater (8) for measuring the temperature of the liquid ($T_{Mess}$), as well as a flow rate determination device (12), connected to the temperature sensor (10), which ascertains the flow rate, in particular the volume flow ($\dot{V}$), of liquids in a coffee machine (2) by determining, without the use of a flow meter, the heat output ($\dot{Q}$), and by calculating a quotient differentiating the flow rate from the heat output ($\dot{Q}$) and the temperature difference ($\Delta T$) multiplied by a material constant (c) specific to the liquid, **characterised in that** the flow rate determination device (12) is designed to determine the temperature difference ($\Delta T$) between the liquid temperature ($T_{Mess}$) and an ambient air temperature ($T_{Raum}$) of the hot drinks machine (2) measured using the temperature sensor (10).

## Revendications

1. Procédé de détermination du débit, en particulier du débit volumique (V) de fluides dans une machine à boissons chaudes (2), qui présente un orifice d'entrée (4) et un orifice de sortie (6) pour le fluide et un chauffage de fluide (8) disposé entre l'orifice d'entrée (4) et l'orifice de sortie (6) et un capteur de température (10) en aval du chauffage de fluide (8), dans lequel le débit est déterminé sans débitmètre en déterminant la puissance calorifique ($\dot{Q}$) et en calculant un quotient, représentant le débit, de la puissance calorifique ($\dot{Q}$) et de la différence de température ($\Delta T$) multipliée par une constante de matériau (c) spécifique au fluide, **caractérisé en ce que** la différence de température ($\Delta T$) issue de la mesure de la température du fluide ($T_{Mess}$) et d'une température ambiante ($T_{Raum}$) mesurée à l'aide du capteur de température (10) de la machine à boissons chaudes (2) est déterminée.

2. Procédé selon la revendication 1, **caractérisé en ce que** la détermination de la puissance calorifique ($\dot{Q}$) s'opère par une saisie de l'atteinte d'une température de consigne ($T_{Soll}$) du fluide déterminée au préalable.

3. Procédé selon la revendication 1 ou 2, **caractérisé en ce que** suite à la détection du dépassement d'une durée ($\Delta t$) jusqu'à l'atteinte d'une température de consigne ($T_{Soll}$) du fluide déterminée au préalable, le taux de transport (F) d'une pompe (24) de la machine à café (2) est réduit.

4. Procédé selon l'une des revendications 1 à 3, **caractérisé en ce que** le débit déterminé, en particulier le débit volumique ($\dot{V}$), est comparé à un débit de consigne, en particulier un débit volumique de consigne ($\dot{V}_{Soll}$).

5. Procédé selon la revendication 4, **caractérisé en ce que** le débit de consigne, en particulier le débit volumique de consigne ($\dot{V}_{Soll}$) est généré au départ d'informations sous forme de codes-barres.

6. Procédé selon l'une des revendications 1 à 5, **caractérisé en ce que** la puissance calorifique ($\dot{Q}$) déterminée du chauffage de fluide (8) est comparée à une puissance calorifique de consigne ($\dot{Q}_{Soll}$) déterminée au préalable.

7. Procédé selon la revendication 6, **caractérisé en ce que** suite à la détection d'une divergence de la puissance calorifique (Q) déterminée du chauffage de fluide (8) par rapport à la puissance calorifique de consigne ($Q_{so}$"), la valeur de la température ambiante ($T_{Raum}$) est modifiée.

8. Machine à boissons chaudes, en particulier machine à café (2), avec un orifice d'entrée (4), un orifice de sortie (6) pour un fluide, avec un chauffage de fluide (8) disposé entre l'orifice d'entrée (4) et l'orifice de sortie (6) et un capteur de température (10) en aval du chauffage de fluide (8) afin de mesurer la température du fluide ($T_{Mess}$) ainsi qu'un dispositif de détermination du débit (12) relié au capteur de température (10), qui détermine, sans débitmètre, le débit, en particulier le débit volumique ($\dot{V}$) de fluides dans une machine à café (2) en déterminant la puissance calorifique ($\dot{Q}$) et en calculant un quotient, représentant le débit, de la puissance calorifique ($\dot{Q}$) et de la différence de température ($\Delta T$) multipliée par une constante de matériau (c) spécifique au fluide, **caractérisée en ce que** le dispositif de détermination du débit (12) est exécuté afin de déterminer la différence de température ($\Delta T$) issue de la température du fluide ($T_{Mess}$) et d'une température ambiante ($T_{Raum}$) mesurée à l'aide du capteur de température (10) de la machine à boissons chaudes (2).

Figur 1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007059769 A1
- DE 102010055849 A1
- EP 0771542 A1
- GB 2449213 A